# FASCICULE DE BREVET EUROPEEN

(11) **EP 2 326 486 B1**
(45) Date de publication et mention de la délivrance du brevet: **02.10.2013**
(21) Numéro de dépôt: 09740439.6
(22) Date de dépôt: 06.08.2009
(51) Int. Cl.: B29C 70/44

(54) **PROCEDE DE FABRICATION D'UNE PIECE EN MATERIAU COMPOSITE ET DISPOSITIF ASSOCIE**
VERFAHREN ZUR HERSTELLUNG EINER AUS EINEM VERBUNDMATERIAL HERGESTELLTEN KOMPONENTE UND ZUGEHÖRIGE VORRICHTUNG
METHOD FOR PRODUCING A COMPONENT MADE OF A COMPOSITE MATERIAL AND ASSOCIATED DEVICE

(30) Priorité: 08.08.2008 FR 0855498
(43) Date de publication de la demande: 01.06.2011
(73) Titulaire: Airbus Operations, 31060 Toulouse (FR)
(72) Inventeur: BLOT, Philippe, F-44000 Nantes (FR); GOHIER, Sébastien, F-44620 La Montagne (FR); LANNUZEL, Mathieu, F-44800 Saint Herblain (FR)
(74) Mandataire: Fantin, Laurent
(86) Numéro de dépôt international: PCT/FR2009/051562
(87) Numéro de publication internationale: WO 2010/015783

(56) Documents cités:
- F.C. CAMPBELL: "Manufacturing processes for advanced composites" 2004, ELSEVIER , OXFORD, UK , XP002517863 ISBN: 1856174158 page 163 - page 171

## Description

La présente invention se rapporte à un procédé de fabrication d'une pièce en matériau composite, et plus particulièrement à un procédé et à un dispositif visant à assurer une imprégnation homogène d'une préforme de fibres par injection ou infusion d'un produit apte à former une matrice.

Les pièces réalisées en matériau composite comprennent une matrice, par exemple en résine, renforcée par des fibres. Selon un mode de réalisation répandu, les fibres se présentent sous la forme d'une préforme de fibres, d'un ou plusieurs pli(s) tissé(s) ou non, pré-imprégné(s) ou non.

Préalablement à la phase de polymérisation, le produit formant la matrice doit imprégner de manière homogène cette préforme pour obtenir une pièce ayant des caractéristiques optimales.

Selon un premier mode opératoire dit par injection, le produit formant la matrice, généralement de la résine, est injecté dans la préforme en un ou plusieurs points, voire sur toute la surface de la préforme, éventuellement avec un média de diffusion.

Selon un autre mode opératoire dit par infusion, le produit formant la matrice est intégré dans la préforme et se présente par exemple sous forme d'un ou plusieurs film(s) de résine intercalé(s) ou accolé(s) aux plis formant ladite préforme.

Pour effectuer cette imprégnation, on utilise un outillage tel que décrit notamment dans les documents US2004/0219244 ou US2005/0031720 et illustré sur la figure 1.

Selon ce document, la préforme 10 est placée dans une première enceinte 12 délimitée par un support 14 et une première membrane 16 semi-étanche, à savoir perméable au gaz mais étanche au produit apte à former la matrice, au moins un point d'alimentation 18 étant prévu dans ladite première enceinte 12.

En complément, l'outillage comprend une seconde enceinte 20 délimitée d'une part par une seconde membrane 22 étanche au gaz, et d'autre part, par la première membrane 16 semi-étanche, ladite enceinte 20 comportant au moins un orifice 24 pour extraire les gaz contenus dans ladite seconde enceinte 20 et aspirer ainsi les gaz présents dans ladite première enceinte 12.

L'aspiration des gaz dans la première enceinte 12 engendre la diffusion du produit apte à former la matrice dans toute la préforme.

Ainsi, la première membrane 16 semi-étanche assure pendant la phase d'infusion ou d'injection un remplissage et un dégazage optimum de la préforme sans aspirer le produit apte à former la matrice.

Des moyens d'étanchéité 26 sont prévus pour assurer l'étanchéité entre le support 14 et la première membrane 16 semi-étanche ainsi que des moyens d'étanchéité 28 entre le support 14 et la seconde membrane 22 étanche.

En complément, un tissu drainant 30 peut être placé dans la seconde enceinte afin de favoriser l'évacuation des gaz.

Pour obtenir le lissage de la surface de la préforme en contact avec la première paroi 16 semi-étanche, une plaque de lissage 32 peut être utilisée et placée dans la seconde enceinte 20, intercalée entre le tissu drainant et la première paroi 16 semi-étanche. Compte tenu de sa fonction, cette plaque de lissage 32 est pleine et ne comprend aucun orifice traversant. Elle permet également d'homogénéiser les efforts de pression sur la préforme.

Selon un mode de réalisation, la membrane 16 semi-étanche est constituée d'un tissu microporeux, le faible diamètre des pores permettant le passage des gaz mais bloquant le passage des fluides visqueux tel que le produit apte à former la matrice.

Lors de la polymérisation, le produit apte à former la matrice tend à se solidifier et à obturer les pores au niveau de la surface ayant été en contact avec la pièce réalisée si bien que la membrane en tissu microporeux est à usage unique.

Selon une problématique, les tissus microporeux n'existant qu'en largeur limitée, les pièces de grandes dimensions ont des défauts de surface au niveau des zones de jonction des bandes de tissus microporeux.

Selon une autre problématique, les tissus microporeux étant peu déformables, leurs mises en place sur des surfaces non développables peuvent s'avérer problématiques et conduire à générer des plis produisant au niveau de la pièce réalisée des défauts de surface.

Selon une autre problématique, lorsque la membrane 16 en tissu microporeux est appliquée sur des zones avec des rayons de courbure réduits, cela tend à déformer les pores et à augmenter leurs dimensions conduisant à une perte d'étanchéité au produit apte à former la matrice au droit desdites zones.

Enfin, le produit formant la matrice tend à coller à la membrane 16 en tissu microporeux et oblige à utiliser un film pelable appelé « peel ply » qui tend à générer des défauts de surface au niveau de la pièce réalisée.

Un procédé utilisant une plaque de lissage perforée est décrite aux pages 163-171 du document "Manufacturing processes for advanced composites" from F.C. CAMPBELL (ISBN: 1-8561-7415-8). Les conduits sont toutefois de forme cylindrique et peuvent marquer la surface du produit.

Les défauts de surface au niveau de la pièce se traduisent par des caractéristiques mécaniques moindres, dues aux ondulations des fibres, mais également par des caractéristiques aérodynamiques moindres lorsque la surface de la pièce réalisée correspond à la surface extérieure d'un fuselage d'aéronef. De plus, ces défauts de surface ne favorisent pas le contrôle des pièces ainsi réalisées, notamment la détection de fissures et de porosité, par des techniques par réflexion d'ondes, généralement utilisées dans l'industrie aéronautique.

Aussi, la présente invention vise à pallier les inconvénients de l'art antérieur en proposant un procédé et un dispositif pour réaliser une pièce en matériau composite à partir d'une préforme de fibres noyée dans une matrice par injection ou infusion d'un produit apte à former ladite matrice permettant de réduire les coûts de fabrication et d'optimiser les caractéristiques de la pièce ainsi réalisée. A cet effet, l'invention a pour objet un procédé de fabrication d'une pièce en matériau composite comportant une préforme de fibres noyée dans une matrice, consistant à placer ladite préforme dans une première enceinte délimitée par une première paroi semi étanche, à savoir perméable au gaz et imperméable à un produit apte à former la matrice, à extraire les gaz dans une deuxième enceinte délimitée par une seconde paroi étanche au gaz et ladite première paroi semi étanche afin d'obtenir la diffusion du produit apte à former la matrice dans la préforme, caractérisé en ce qu'il consiste à utiliser comme première paroi semi étanche au moins une plaque avec une pluralité de conduits de forme évasée avec une petite section orientée vers la première enceinte, débouchant de part et d'autre de ladite au moins une plaque et au moins une membrane semi-étanche superposée à ladite au moins une plaque.

D'autres caractéristiques et avantages ressortiront de la description qui va suivre de l'invention, description donnée à titre d'exemple uniquement, en regard des dessins annexés sur lesquels :
- la figure 1 est une coupe illustrant de manière schématique un outillage selon l'art antérieur,
- la figure 2 est une coupe illustrant de manière schématique un dispositif selon une variante simplifiée de l'invention pour réaliser une pièce en matériau composite à partir d'une préforme de fibres noyée dans une matrice par injection ou infusion d'un produit apte à former ladite matrice,
- la figure 3 est une coupe illustrant de manière schématique un dispositif selon une autre variante de l'invention, et
- la figure 4 est une coupe illustrant en détail les orifices d'une plaque formant une partie d'une paroi semi-étanche.

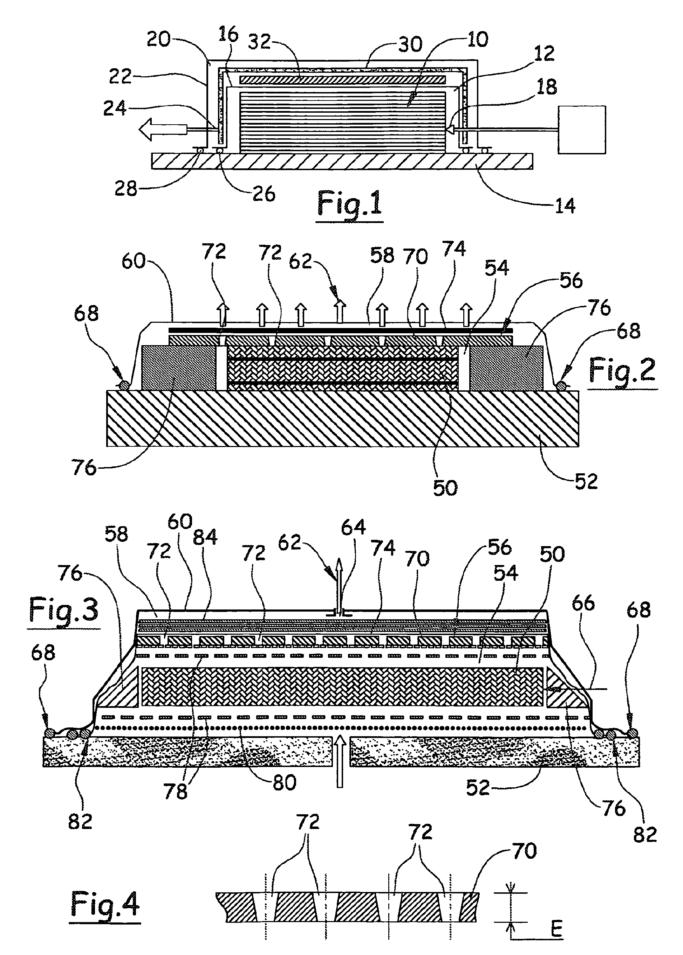

Sur les figures 2 et 3, on a représenté en 50 au moins une préforme de fibres destinée à être noyée dans une matrice, par exemple une résine, de manière à obtenir après polymérisation une pièce en matériau composite formant une pièce d'un aéronef. Toutefois, le procédé de l'invention n'est pas limité au domaine aéronautique.

Selon les variantes, la préforme peut être obtenue par empilage de plis de fibres ou par l'assemblage de panneaux de fibres, les fibres pouvant être imprégnées ou non et disposées selon un arrangement organisé ou aléatoire.

La préforme n'est pas plus décrite car elle est connue de l'homme du métier et peut avoir différentes formes, être constituée de fibres de différentes natures. La matrice est réalisée à partir d'un produit susceptible d'être fluide dans un premier état et d'être solide dans un deuxième état. A titre d'exemple, la matrice est formée de résine.

Le produit apte à former la matrice n'est pas plus décrit car il est connu de l'homme du métier et peut varier en fonction des caractéristiques recherchées. La présente invention vise à proposer un procédé et un dispositif associé permettant de noyer la préforme de fibres dans un produit apte à former la matrice en diffusant ledit produit dans la préforme.

Selon un premier mode opératoire dit par injection, le produit apte à former la matrice peut être injecté dans la préforme et provenir d'un réservoir distant de la préforme, comme illustré sur la figure 3.

Selon un autre mode opératoire dit par infusion, le produit apte à former la matrice peut être stocké sous forme solide dans la préforme, par exemple sous forme d'au moins un film, comme illustré sur la figure 2.

Le dispositif pour la fabrication d'une pièce en matériau composite comprend un support 52 sur lequel repose directement ou non la préforme 50, une première enceinte 54 dans laquelle est placée la préforme 50 et délimitée par ledit support 52 et une première paroi 56 semi étanche, à savoir perméable au gaz et imperméable au produit apte à former la matrice, une deuxième enceinte 58 délimitée par une seconde paroi 60 étanche au gaz et ladite première paroi 56 semi étanche, ainsi que des moyens 62 pour extraire les gaz de la deuxième enceinte 58.

Le support 52 peut être plan ou non. Généralement, il a des formes adaptées à celles de la pièce à réaliser en contact avec ledit support 52. Le support n'est pas plus détaillé car il est connu de l'homme du métier et peut avoir différentes configurations en fonction notamment de la pièce à réaliser.

Les moyens 62 pour extraire les gaz comprennent au moins un conduit communiquant avec la deuxième enceinte 58 via au moins un orifice 64. Ces moyens 62 ne sont pas plus décrits car ils sont connus de l'homme du métier. Dans le cas d'un mode opératoire par injection, le dispositif comprend au moins une alimentation 66 en produit apte à former la matrice débouchant dans la première enceinte 54 via au moins un orifice. Cette alimentation n'est pas plus détaillée car elle est connue de l'homme du métier et peut avoir différentes configurations en fonction notamment du produit apte à former la matrice et/ou de la pièce à réaliser.

La seconde paroi 60 étanche au gaz peut se présenter sous la forme d'une membrane souple et étanche, comme les dispositifs de l'art antérieur.

Selon un mode de réalisation, la seconde paroi 60 étanche au gaz recouvre l'ensemble des autres éléments de l'outillage et comprend en périphérie une zone de contact avec le support 52, des moyens d'étanchéité 68 étant avantageusement prévus pour assurer l'étanchéité entre ladite seconde paroi 60 et ledit support 52.

Cette seconde paroi n'est pas plus détaillée car elle est connue de l'homme du métier.

Selon l'invention, la première paroi 56 semi étanche comprend au moins une plaque 70 avec des conduits 72 débouchant de part et d'autre de ladite au moins une plaque 70 et au moins une membrane 74 semi étanche superposée à ladite au moins une plaque 70.

Cette combinaison d'au moins une membrane 74 semi étanche et d'au moins une plaque 70 perforée ou micro perforée permet d'obtenir une aspiration des gaz de type surfacique et donc d'obtenir un meilleur dégazage de la préforme et par conséquent une meilleure diffusion du produit apte à former la matrice contrairement à l'art antérieur utilisant une tôle de lissage non perforée.

Selon un mode de réalisation, les conduits 72 sont obtenus par perforation ou microperforation.

Cette plaque 70 avec des conduits 72 traversants permet non seulement de lisser la surface de la pièce à réaliser en contact avec ladite plaque à la manière d'une tôle de lissage de l'art antérieur mais permet également d'extraire les gaz de la première enceinte 54 afin d'assurer la diffusion du produit apte à former la matrice dans toute la préforme 50.

Contrairement à une tôle de lissage non perforée de l'art antérieur pour laquelle l'extraction est opérée en périphérie de la tôle, la plaque 70 avec des conduits 72 traversants permet une extraction de type surfacique et une meilleure diffusion du produit apte à former la matrice dans la préforme ce qui contribue à améliorer les caractéristiques de la pièce ainsi réalisée.

La section des conduits 72 est adaptée notamment à la pression exercée sur la pièce à réaliser afin de ne pas marquer la pièce. Ainsi, la section des conduits 72 est inversement proportionnelle à la pression exercée.

Les conduits peuvent être prévus sur la globalité de la plaque 70 ou seulement sur au moins une zone.

La répartition des conduits 72 peut être homogène ou non.

La plaque 70 peut recouvrir toute la préforme ou seulement une partie de la préforme 50. En variante, la paroi 56 semi étanche peut comprendre plusieurs plaques 70 juxtaposées.

La plaque 70 peut être plane ou avoir des formes adaptées à la pièce à réaliser. La plaque 70 peut être métallique ou en un autre matériau, plus ou moins rigide. De préférence, son épaisseur E varie entre 0,1 mm et 25 mm.

Selon les cas, la plaque 70 peut reposer en périphérie contre au moins une cale de bordure 76 disposée en périphérie de la préforme pour obtenir un meilleur calibrage de la pièce à réaliser.

La surface de la plaque 70 en contact avec la pièce à réaliser peut en fonction de sa matière et du produit apte à former la matrice comprendre un revêtement anti-adhérent ou être enduite d'un agent démoulant.

Selon une autre caractéristique de l'invention, lorsque la plaque 70 est relativement épaisse, avec une épaisseur E supérieure ou égale à environ 10 mm, les conduits 72 sont évasés de manière à favoriser le démoulage desdits conduits après polymérisation du produit apte à former la matrice. Cette caractéristique permet de pouvoir réutiliser la plaque 70 ce qui contribue à réduire les coûts de production.

Selon un mode de réalisation illustré sur la figure 4, les conduits 72 sont tronconiques pour favoriser le démoulage.

Pour limiter le marquage du produit apte à former la matrice dans la seconde enceinte 58, les conduits 72 sont tronconiques, la petite section étant orientée vers la première enceinte 54 et la grande section vers la seconde enceinte 58.

Selon un mode de réalisation, la membrane 74 est constituée d'un tissu microporeux, par exemple un tissu de type Gore-tex®.

Selon une caractéristique importante de l'invention, la membrane 74 semi étanche est disposée du côté de la face de la plaque 70 opposée à celle en contact avec la pièce à réaliser.

Ainsi, la membrane 74 semi étanche ne peut être en contact avec le produit apte à former la matrice que sur une faible surface correspondant à celles des conduits 72 traversant.

La membrane 60 permet ainsi de plaquer la membrane 74 sur la plaque 70 contre les cales 76 de bordure et ces dernières contre le support 52, ce qui contribue à assurer une étanchéité entre ces différents éléments.

En complément, le dispositif peut comprendre des tissus 78 à délaminer de part et d'autre de la préforme afin de favoriser le démoulage de la pièce réalisée ainsi qu'un grillage avec un revêtement anti-adhérent 80 en contact direct avec le support 52 pour favoriser la diffusion du produit apte à former la matrice avant injection dans la préforme.

Des moyens d'étanchéité 82 sont prévus pour assurer l'étanchéité entre le support 52 et ladite membrane 74 semi étanche.

En complément, un tissu drainant 84 peut être placé dans la seconde enceinte 58 afin de favoriser l'évacuation des gaz, de préférence intercalé entre la seconde paroi 60 et la membrane 74 semi étanche.

## Revendications

1. Procédé de fabrication d'une pièce en matériau composite comportant une préforme de fibres (50) noyée dans une matrice, consistant à placer ladite préforme (50) dans une première enceinte (54) délimitée par une première paroi (56) semi étanche, à savoir perméable au gaz et imperméable à un produit apte à former la matrice, à extraire les gaz dans une deuxième enceinte (58) délimitée par une seconde paroi (60) étanche au gaz et ladite première paroi (56) semi étanche afin d'obtenir la diffusion du produit apte à former la matrice dans la préforme (50), **caractérisé en ce qu'**il consiste à utiliser comme première paroi (56) semi étanche au moins une plaque (70) avec une pluralité de conduits (72) de forme évasée avec une petite section orientée vers la première enceinte (54), débouchant de part et d'autre de ladite au moins une plaque et au moins une membrane (74) semi-étanche superposée à ladite au moins une plaque (70).

2. Procédé de fabrication d'une pièce en matériau composite selon la revendication 1, caractérisé en ce la membrane (74) semi étanche est disposée du côté de la face de la plaque (70) opposée à celle en contact avec la pièce à réaliser.

3. Procédé de fabrication d'une pièce en matériau composite selon l'une quelconque des revendications précédentes, **caractérisé en ce qu'**il consiste à utiliser au moins une cale de bordure (76) en périphérie de la préforme sur laquelle repose la plaque (70).

4. Dispositif pour la fabrication d'une pièce en matériau composite comportant une préforme de fibres (50) noyée dans une matrice, ledit dispositif comportant une première enceinte (54) dans laquelle est placée la préforme (50) et délimitée par une première paroi (56) semi étanche, à savoir perméable au gaz et imperméable à un produit apte à former la matrice, une deuxième enceinte (58) délimitée par une seconde paroi (60) étanche au gaz et ladite première paroi (56) semi étanche, ainsi que des moyens (62) pour extraire les gaz de la deuxième enceinte (58), **caractérisé en ce que** la première paroi (56) semi-étanche comprend au moins une plaque (70) avec une pluralité de conduits (72) de forme évasée avec une petite section orientée vers la première enceinte (54), débouchant de part et d'autre de ladite au moins une plaque et au moins une membrane (74) semi-étanche superposée à ladite au moins une plaque (70).

5. Dispositif pour la fabrication d'une pièce en matériau composite selon la revendication 4, **caractérisé en ce que** les conduits (72) sont tronconiques.

6. Dispositif pour la fabrication d'une pièce en matériau composite selon l'une quelconque des revendications 4 à 5, **caractérisé en ce que** la membrane (74) semi étanche est disposée du côté de la face de la plaque (70) opposée à celle en contact avec la pièce à réaliser.

7. Dispositif pour la fabrication d'une pièce en matériau composite selon l'une quelconque des revendications 4 à 6, **caractérisé en ce qu'**il comprend au moins une cale de bordure (76) en périphérie de la préforme sur laquelle repose la plaque (70).

## Patentansprüche

1. Verfahren zur Herstellung einer Komponente aus einem Verbundmaterial mit einer Vorform (50) aus Fasern, die in eine Matrix eingebettet sind, wobei das Verfahren darin besteht, diese Vorform (50) in einen ersten Bereich (54) einzubringen, der von einer ersten Wand (56) begrenzt ist, die halbdurchlässig und zwar durchlässig für Gas und undurchlässig für ein zur Ausbildung der Matrix geeignetes Material ist, und Gase aus einem zweiten Bereich (58) zu entfernen, der von einer gasdichten zweiten Wand (60) und der halbdurchlässigen ersten Wand (56) begrenzt ist, um die Diffusion des zur Ausbildung der Matrix geeigneten Produkts in die Vorform (50) zu bewirken, **dadurch gekennzeichnet, dass** das Verfahren darin besteht, als halbdurchlässige erste Wand (56) wenigstens eine Platte (70) mit einer Vielzahl von Durchführungen (72) zu verwenden, die eine aufgeweitete Form aufweisen und deren kleiner Querschnitt dem ersten Bereich (54) zugewandt ist und die auf beiden Seiten der wenigstens einen Platte enden, und wenigstens eine halbdurchlässige Membran (74), die oberhalb der wenigstens einen Platte (70) angeordnet ist.

2. Verfahren zur Herstellung einer Komponente aus Verbundmaterial nach Anspruch 1, **dadurch gekennzeichnet, dass** die halbdurchlässige Membran (74) auf der Seite der Platte (70) angeordnet ist, die der an der herzustellenden Komponente anliegenden Seite gegenüberliegt.

3. Verfahren zur Herstellung einer Komponente aus Verbundmaterial nach einem der vorhergehenden Ansprüche, **dadurch gekennzeichnet, dass** das Verfahren darin besteht, wenigstens eine Randstütze (76) entlang dem Umfang der Vorform zu verwenden, auf der die Platte (70) ruht.

4. Vorrichtung für die Herstellung einer Komponente aus Verbundmaterial, die eine Vorform (50) aus Fasern aufweist, die in einer Matrix eingebettet sind, wobei die Vorrichtung einen ersten Bereich (54) aufweist, in den die Vorform (50) eingebracht ist und der von einer ersten Wand (56) begrenzt ist, die halbdurchlässig und zwar durchlässig für Gas und undurchlässig für ein zur Ausbildung der Matrix geeignetes Material ist, und einen zweiten Bereich (58) der von einer gasdichten zweiten Wand (60) und der halbdurchlässigen ersten Wand (56) begrenzt ist, ebenso wie Mittel (62), um Gase aus dem zweiten Bereich (58) zu entfernen, **dadurch gekennzeichnet, dass** die halbdurchlässige erste Wand (56) wenigstens eine Platte (70) mit einer Vielzahl von Durchführungen (72) umfasst, die eine aufgeweitete Form aufweisen und deren kleiner Querschnitt dem ersten Bereich (54) zugewandt ist und die auf beiden Seiten der wenigstens einen Platte enden, und wenigstens eine halbdurchlässige Membran (74), die auf die wenigstens eine Platte (70) aufgelegt ist.

5. Vorrichtung zur Herstellung einer Komponente aus Verbundmaterial nach Anspruch 4, **dadurch gekennzeichnet, dass** die Durchführungen (72) kegelstumpfförmig ausgebildet sind.

6. Vorrichtung für die Herstellung einer Komponente aus Verbundmaterial nach einem der Ansprüche 4 bis 5, **dadurch gekennzeichnet, dass** die halbdurchlässige Membran (74) auf der Seite der Platte (70) angeordnet ist, die der an der herzustellenden Komponente anliegenden Seite gegenüberliegt.

7. Vorrichtung für die Herstellung einer Komponente aus Verbundmaterial nach einem der Ansprüche 4 bis 6, **dadurch gekennzeichnet, dass** die Vorrichtung wenigstens eine Randstütze (76) aufweist, die entlang des Umfangs der Vorform angeordnet ist und auf der die Platte (70) ruht.

## Claims

1. A method for fabricating a part made from composite material comprising a fibre preform (50) embedded in a matrix, comprising placing said preform (50) in a first enclosure (54) delimited by a first semi-impermeable wall (56), namely permeable to gas and impermeable to a product able to form the matrix, extracting the gases into a second enclosure (58) delimited by a second gastight wall (60) and said first semi-impermeable wall (56) in order to obtain the diffusion of the product able to form the matrix in the preform (50), **characterised in that** it comprises using, as the first semi-impermeable wall (56), at least one plate (70) with a plurality of pipes (72) splayed in shape with a small cross section oriented towards the first enclosure (54), emerging on either side of said at least one plate and at least one semi-impermeable membrane (74) superimposed on said at least one plate (70).

2. A method for fabricating a part made from composite material according to claim 1, **characterised in that** the semi-impermeable membrane (74) is disposed against the face of the plate (70) opposite to the one in contact with the part to be produced.

3. A method for fabricating a part made from composite material according to any one of the preceding claims, **characterised in that** it comprises using at least one edge shim (76) at the periphery of the preform on which the plate (70) rests.

4. A device for fabricating a composite material part comprising a fibre preform (50) embedded in a matrix, said device comprising a first enclosure (54) in which the preform (50) is placed and delimited by a first semi-impermeable wall (56), namely permeable to gas and impermeable to a product able to form the matrix, a second enclosure (58) delimited by a second gastight wall (60) and said first semi-impermeable wall (56), as well as means (62) for extracting the gases from the second enclosure (58), **characterised in that** the first semi-impermeable wall (56) comprises at least one plate (70) with a plurality of pipes (72) splayed in shape with a small cross section oriented towards the first enclosure (54), emerging on either side of said at least one plate and at least one semi-impermeable membrane (74) superimposed on said at least one plate (70).

5. A device for fabricating a part made from composite material according to claim 4, **characterised in that** the pipes (72) are frustoconical.

6. A device for fabricating a part made from composite material according to any one of claims 4 to 5, **characterised in that** the semi-impermeable membrane (74) is disposed alongside the face of the plate (70) opposite to the one in contact with the part to be produced.

7. A device for fabricating a part made from composite material according to any one of claims 4 to 6, **characterised in that** it comprises at least one edge shim (76) at the periphery of the preform on which the plate (70) rests.
